# EUROPÄISCHE PATENTSCHRIFT

(11) **EP 3 195 714 B1**
(45) Veröffentlichungstag und Bekanntmachung des Hinweises auf die Patenterteilung: **26.06.2019**
(21) Anmeldenummer: 17401002.5
(22) Anmeldetag: 23.01.2017
(51) Int. Cl.: A01C 17/00

(54) **VERFAHREN ZUM KORRIGIEREN EINES STREUBILDES EINES DÜNGERSTREUERS BEI SEITENWIND**
METHOD FOR CORRECTING A SPREAD PATTERN OF A FERTILIZER SPREADER IN A SIDEWIND
PROCÉDÉ DE CORRECTION D'UNE COURBE DE DISPERSION D'UN ÉPANDEUR D'ENGRAIS EN CAS DE VENT DE TRAVERS

(30) Priorität: 25.01.2016 DE 102016101185
(43) Veröffentlichungstag der Anmeldung: 26.07.2017
(73) Patentinhaber: Amazonen-Werke H. Dreyer GmbH & Co. KG, 49205 Hasbergen (DE)
(72) Erfinder: Rahe, Florian, 49504 Lotte (DE); Rüsse, Mario, 49080 Osnabrück (DE)

(56) Entgegenhaltungen:
- EP-A1- 2 556 738
- EP-A1- 2 944 175

## Beschreibung

Die Erfindung betrifft ein Verfahren zum Korrigieren eines Streubildes eines Düngerstreuers, sowie einen Düngerstreuer gemäß den Oberbegriffen der Ansprüche 1 und 7.

Aus der EP 2556738 A1 ist bereits ein Verfahren und ein Düngerstreuer gemäß dem Oberbegriff der Ansprüche 1 und 7 bekannt.

Beim Ausbringen von Mineraldünger mithilfe eines Zentrifugaldüngerstreuers wird bei windigen Witterungsverhältnissen die gleichmäßige Düngerausbringung gestört. Für entsprechende Streubedingungen ist vorgesehen, dass die Windgeschwindigkeit und Windrichtung bei der Einstellung und Steuerung des Düngerstreuers berücksichtigt werden. Im Normalstreumodus werden dann die von einer Korrektureinheit berechneten Sollwerte zum Ansteuern oder Regeln entsprechender Stellglieder zur Erzeugung des Streubildes übernommen und eingestellt. Bei den bekannten Windkontrollsystemen ergibt sich jedoch das Problem, dass bei Fahrgassen direkt am Feldrand Dünger über die Feldgrenze geworfen wird. Dies ist jedoch aus umweltrechtlichen Gesichtspunkten nicht erlaubt.

Damit dies nicht geschieht, offenbart die EP 2 944 175 A1, dass im Feldrandbereich die von der Korrektureinheit bereitgestellten Sollwerte durch gesetzliche Abstandsvorgaben überschrieben werden. Somit ist die Korrektureinheit im Feldrandbereich deaktiviert.

Hiervon ausgehend liegt der vorliegenden Erfindung die Aufgabe zugrunde, ein Verfahren und einen Düngerstreuer zum Erzeugen eines vorbestimmten Streubildes bereitzustellen, die ermöglichen Windeinflüsse bei der Mineraldüngerverteilung zu kompensieren und gleichzeitig beim Grenzstreuen die Anforderungen der Düngerverordnung auf peinfache Art und Weise erfüllen zu können.

Erfindungsgemäß wird die Aufgabe durch die Merkmale der Ansprüche 1 und 7 gelöst.

Bei dem erfindungsgemäßen Verfahren wird zunächst die Windstärke und Windrichtung gemessen. Um den Windeinfluss zu kompensieren wird mindestens ein Sollwert zum Ansteuern/Regeln von jeweils mindestens einem Stellglied zur Erzeugung eines vorbestimmten Streubildes in Abhängigkeit der gemessenen Windstärke und Windrichtung angepasst.

Dazu gibt es zwei Korrekturmodi. Bei Seitenwind wird in einem ersten Korrekturmodus der mindestens eine Sollwert derart angepasst, dass sich die seitliche Ausdehnung des Streubildes des Düngers auf der dem Seitenwind zugewandten Seite des Düngerstreuers nach außen hin vergrößert (z.B. die Wurfweite vergrößert und/oder das Streubild nach außen zu dieser Seite gedreht wird) . Das bedeutet, dass das Streubild, das sich aufgrund des Windes verkleinert wieder an das vorbestimmte Streubild angepasst werden kann derart, dass der Windeinfluss kompensiert werden kann.

In einem zweiten Korrekturmodus wird der mindestens eine Sollwert derart angepasst, dass sich die Ausdehnung des Streubilds auf der dem Seitenwind abgewandten Seite des Düngerstreuers verkleinert (z.B. durch Reduzieren der Wurfweite und/oder durch Drehen des Streubildes nach innen). Das vorbestimmte Streubild dehnt sich in Windrichtung aus. Im zweiten Korrekturmodus kann dieses Streubild wieder an das vorbestimmte Streubild angepasst werden bzw. korrigiert werden.

Gemäß der vorliegenden Erfindung wird beim Grenzstreuen an einer Feldgrenze auf der Seite des Düngerstreuers, die der Feldgrenze zugewandt ist, der erste Korrekturmodus deaktiviert während der zweite Korrekturmodus aktiviert ist. Stattdessen kann auf der dem Feld und Seitenwind zugewandten Seite mindestens ein entsprechendes Stellglied mit den Sollwerten zur Erzeugung des vorbestimmten Streubildes bzw. Grenzstreubildes ohne Windkorrektur angesteuert/geregelt werden. Dabei wird zu Gunsten einer vereinfachten Steuerung/Regelung in Kauf genommen, dass windbedingt das resultierende Streubild auf der Seite der Feldgrenze eine kleinere seitliche Ausdehnung in Richtung Feldgrenze aufweist als das vorbestimmte Streubild, hier Grenzstreubild auf dieser Seite.

Die vorliegende Erfindung ermöglicht nun eine einfache und korrekte Einstellung des Streubilds im Grenzstreumodus bei Seitenwind, wobei auf einfache Art und Weise die gesetzlichen Vorgaben für das Grenzstreuen eingehalten werden können, derart, dass sichergestellt wird, beziehungsweise das Risiko minimiert wird, dass Dünger außerhalb der Feldgrenze geworfen wird oder weiter als eine vorbestimmte Grenze innerhalb (Grabenstreuen) oder außerhalb (Randstreuen) der Feldgrenze geworfen wird. Dabei können auf der feldinneren Seite die Einstellungen, die im ersten oder zweiten Korrekturmodus vorgegeben werden, trotzdem übernommen werden. Auf der feldäußeren Seite wird jedoch der erste Korrekturmodus deaktiviert, d.h. nicht verwendet. Das heißt, dass bei Wind von der Feldgrenze her die Sollwerte nicht z.B. zur Wurfweitenvergrößerung angepasst werden. Mit dieser defensiven Regel, beziehungsweise Steuerstrategie wird sicher verhindert, dass der Dünger über die Feldgrenze hinausgeworfen wird.

Unter Grenzstreuen versteht man hier das Streuen an einer Feldgrenze, das heißt zum Beispiel an einer Feldgrenze zu einem benachbarten Feld, am Feldende oder an der Feldgrenze zu einem Graben. Hierzu gibt es unterschiedliche Grenzstreumodi um entsprechende gesetzliche Vorschriften zu erfüllen, das heißt, dass das Streubild auf der der Grenze zugewandten Seite derart angepasst wird, dass entweder kein Dünger über die Feldgrenze geworfen wird oder aber höchstens bis zu einem bestimmten Abstand über die Feldgrenze geworfen wird oder ein bestimmter Abstand zur Feldgrenze eingehalten wird.

Dennoch ist es möglich, dass an einer Feldgrenze auf der Seite des Düngerstreuers, die der Feldgrenze zugewandt ist, der zweite Korrekturmodus aktiviert wird. Das heißt, dass auf der feldäußeren Seite nur Einstellungen vorgenommen werden, die die Wurfweite reduzieren und / oder das Streubild nach innen dehnen. Wenn also von der Korrektureinrichtung erkannt wird, dass bei einer gemessenen Windstärke und/oder Richtung der Dünger über die Feldgrenze geworfen werden würde (z.B. aufgrund von Vergleich der Messwerte mit abgespeicherten Windrichtungen und/ oder -stärken und entsprechenden resultierenden Streubildern bzw. Wurfweiten, die vorab experimentell bestimmt oder berechnet wurden), dann kann gezielt der zweite Korrekturmodus beim Grenzstreuen eingesetzt werden.

Mindestens eines folgender Stellglieder kann zum Korrigieren des Streubildes angesteuert werden. Das Antriebselement einer jeweiligen (linken oder rechten) Schleuderscheibe. Über die Drehzahl der Schleuderscheibe lässt sich die Wurfweite des Düngers einstellen. Je schneller sich die Scheibe dreht, desto größer ist die Wurfweite. Ferner können Mittel zur Einstellung der Position der Aufgabefläche des Düngers auf der Schleuderscheibe entsprechend angesteuert werden. Somit kann die Stellung eines über einer jeweiligen Schleuderscheibe ausgebildeten Einleitsystems verändert werden, was wiederum ermöglicht, den Abwurfwinkel einzustellen, beziehungsweise das Streubild nach außen oder nach innen zu drehen. Es ist auch möglich die Aktoren der Dosierorgane der Streuscheiben anzusteuern, um so auch die ausgebrachte Düngermenge pro Zeit und somit die Verteilung beziehungsweise Düngerdichte anzupassen.

Es kann mindestens einer der nachfolgend aufgeführten Sollwerte oder ein entsprechend proportionaler Wert zur Korrektur des Streubilds in Abhängigkeit der gemessenen Windstärke und Windrichtung angepasst werden:
Drehzahl eines jeweiligen Antriebselements einer Schleuderscheibe, Dosiermenge pro Zeit eines jeweiligen Dosierorgans, Abwurfwinkel des Düngers von einer jeweiligen Schleuderscheibe, Stellung eines über einer Schleuderscheibe ausgebildeten Düngereinleitsystems, Winkelposition einer jeweiligen Wurfschaufel.

Um das durch Wind verzerrte Streubild wieder auszugleichen, kann beispielsweise die Drehzahl der Schleuderscheiben entsprechend angepasst werden. Die Veränderung der Drehzahlen einer oder beider Schleuderscheiben führt allerdings dazu, dass sich die Beschleunigungsphase, beziehungsweise die Verweildauer der Düngerkörner auf der oder den Schleuderscheiben verändert. Es kann eine Feinkorrektur durch zum Beispiel Verdrehen der Aufgabefläche des Düngers auf der oder den Schleuderscheiben erfolgen. Das heißt, dass die Position eines Düngereinleitsystems entsprechend angepasst wird.

Wenn beim Grenzstreuen auf der Seite des Düngerstreuers, die der Feldgrenze zugewandt ist der zweite Korrekturmodus aktiviert ist, wird die Wurfweite, insbesondere die Drehzahl der Schleuderscheibe, die der Feldgrenze zugewandt ist, reduziert und/oder das von dieser Schleuderscheibe erzeugte Streubild nach innen von der Feldgrenze weggedreht, beispielsweise durch Ändern des Abwurfwinkels, insbesondere durch Ändern der Position der Aufgabefläche des Düngers über der Schleuderscheibe oder durch beispielsweise Ändern einer Position mindestens einer Wurfschaufel auf der Schleuderscheibe.

Gleichzeitig wird die Wurfweite, das heißt insbesondere die Drehzahl der Schleuderscheibe, die der Feldgrenze abgewandt ist, erhöht und/oder das von dieser Schleuderscheibe erzeugte Streubild nach außen in Bezug auf den Düngerstreuer gedreht, um den Windeinfluss zu kompensieren.

Ein Düngerstreuer insbesondere zum Durchführen des Verfahrens nach mindestens einem der Ansprüche 1 bis 6 umfasst eine Einrichtung zum Messen der Windstärke und Windrichtung, sowie eine Korrektureinrichtung, die mindestens einen Sollwert zum Ansteuern/Regeln von jeweils mindestens einem Stellglied zur Erzeugung des Streubildes in Abhängigkeit der gemessenen Windstärke und Windrichtung anpassen kann. Die Korrektureinrichtung ist dabei derart ausgebildet, dass in einem ersten Korrekturmodus der mindestens eine Sollwert derart angepasst werden kann, dass sich die seitliche Ausdehnung des Streubildes auf der dem Seitenwind zugewandten Seite des Düngerstreuers vergrößert. In einem zweiten Korrekturmodus kann der mindestens eine Sollwert derart angepasst werden, dass sich die seitliche Ausdehnung auf der gegenüberliegenden Seite verkleinern kann. Die Korrektureinrichtung ist derart ausgelegt, dass der erste Korrekturmodus deaktivierbar ist, während der zweite Korrekturmodus gleichzeitig aktivierbar ist. Dies ist insbesondere vorteilhaft im Grenzstreubetrieb, wobei dann der erste Korrekturmodus auf der Seite des Düngerstreuers, die einer Feldgrenze zugewandt ist, nicht aktiviert wird.

Vorteilhafterweise ist eine Einrichtung vorgesehen, die erfassen kann, ob der Düngerstreuer im Grenzstreubetrieb arbeitet. Entsprechendes kann beispielsweise über GPS ermittelt werden, oder durch ein Einschaltsignal zum Starten eines Grenzstreubetriebs, beziehungsweise Modus, etc. Ein entsprechendes Signal wird dann an die Korrektureinrichtung weitergeleitet, die dann den ersten Korrekturmodus deaktivieren kann.

Die Erfindung wird nachfolgend anhand der folgenden Figuren näher erläutert.
- Fig. 1: zeigt grob schematisch eine Seitenansicht eines an den einen Ackerschlepper angekoppelten Düngerstreuers.
- Fig. 2: zeigt grob schematisch eine Draufsicht auf einen Düngerstreuer.
- Fig. 3: zeigt ein Streubild mit und ohne Seitenwindeinfluss.
- Fig. 4 a bis 4 c: zeigen grob schematisch eine Aufsicht auf einen Düngerstreuer mit entsprechenden Streubildern beim Grenzstreuen.
- Fig. 5 a: zeigt grob schematisch eine Draufsicht auf einen Düngerstreuer mit Streubild mit und ohne Seitenwindeinfluss.

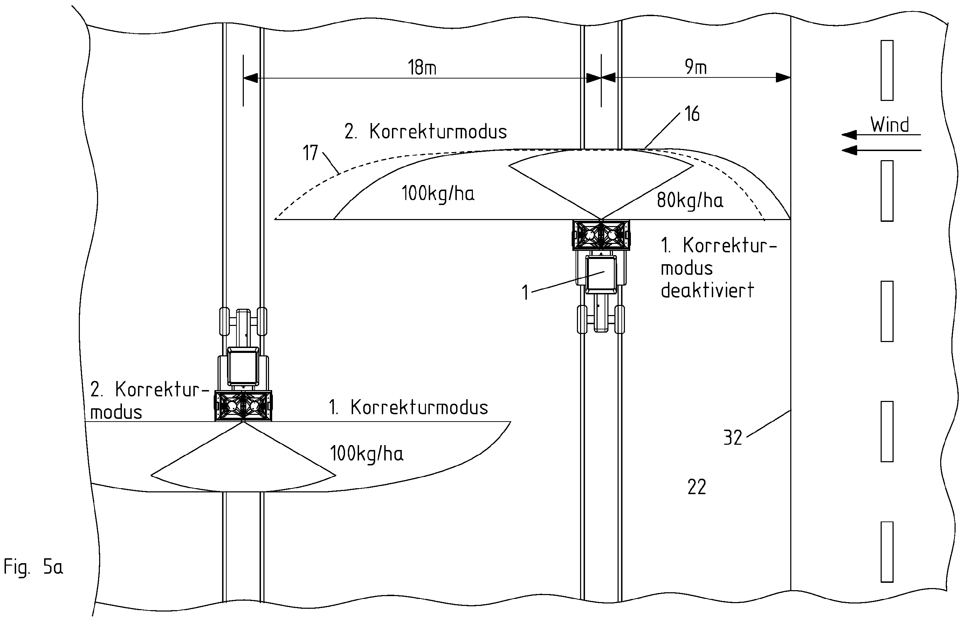

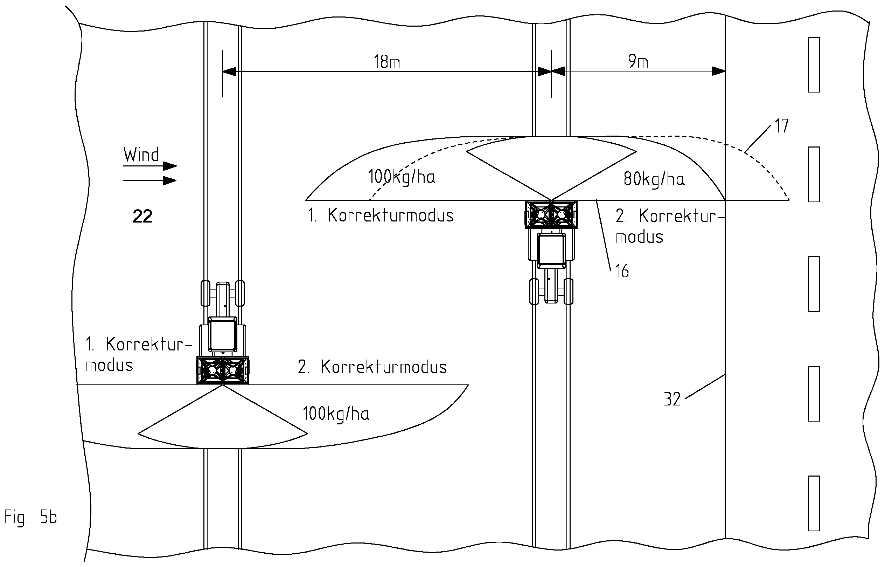

- Fig. 5 b: zeigt grob schematisch eine Draufsicht auf einen Düngerstreuer mit Streubild mit und ohne Seitenwindeinfluss.

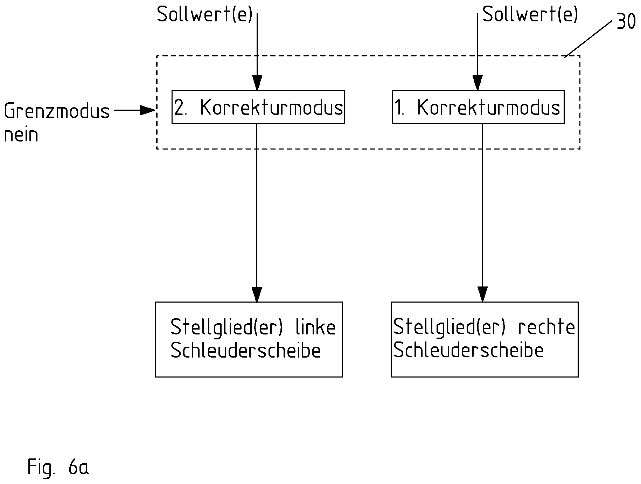

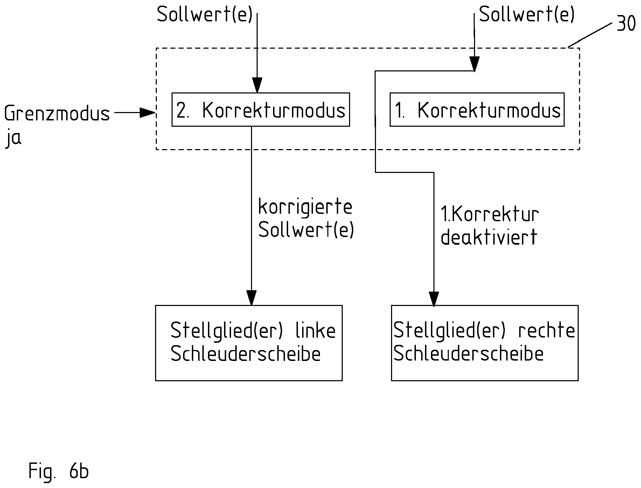

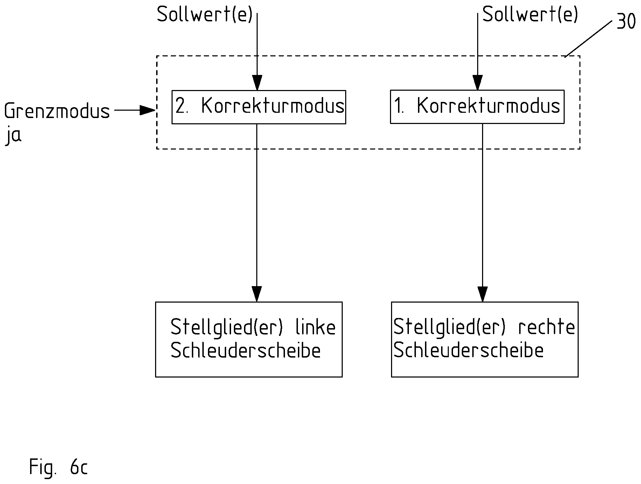

- Fig. 6 a: zeigt grob schematisch einen Signalplan einer Windkorrektur bei einer Fahrgasse in der Mitte des Feldes.
- Fig. 6 b: zeigt einen Signalplan im Grenzstreumodus.
- Fig. 6 c: zeigt einen Signalplan im Grenzstreumodus.

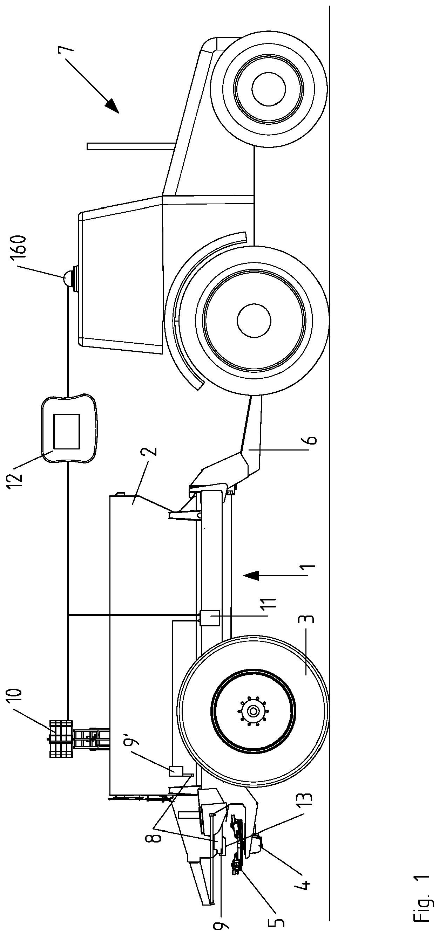

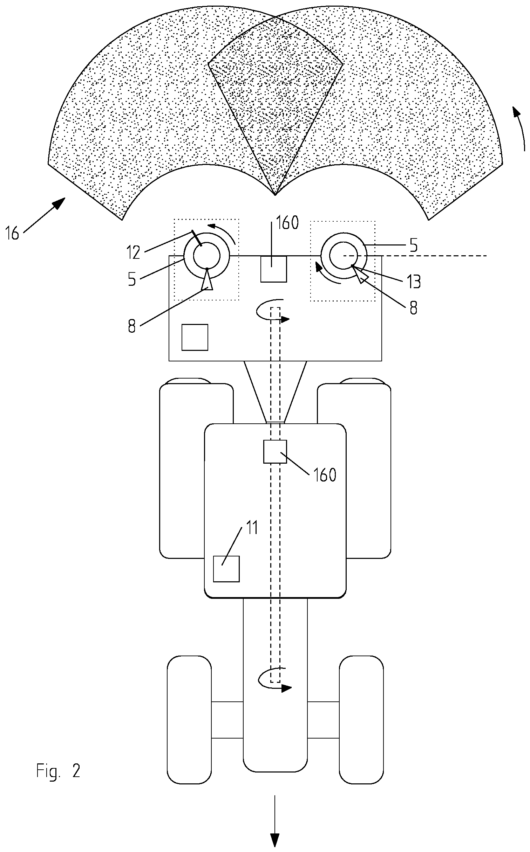

Fig. 1 und 2 zeigen einen Düngerstreuer, hier in Form eines Zentrifugaldüngerstreuers 1 mit einem Vorratsbehälter 2 und einem Fahrwerk 3. Der Düngerstreuer ist über die Zugdeichsel 6 an einen Ackerschlepper 7 angekuppelt. Bei diesem Ausführungsbeispiel ist der Düngerstreuer 1 als Zweischeibenstreuer ausgebildet und umfasst zwei separat ansteuerbare Schleuderscheiben 5. Die Schleuderscheiben 5 sind wie durch die Pfeile (Fig. 2) angedeutet über einen motorischen Antrieb 4 getrennt antreibbar. Bei diesem Ausführungsbeispiel drehen sich die Scheiben beispielsweise nach außen. Auf den Schleuderscheiben 5 können Wurfschaufeln 12 (Fig. 2) ausgebildet sein, die beispielsweise auf bekannte Weise hinsichtlich ihres Anstellwinkels verstellbar befestigt sind. Der Übersichtlichkeit halber ist nur eine einzige Streuschaufel 12 stark schematisiert angedeutet. Ferner ist oberhalb der Schleuderscheiben 5 jeweils ein Einleitsystem 13 für Dünger vorgesehen, wobei die Position der Aufgabefläche 13, individuell verstellbar ist, zum Beispiel in / entgegen der Drehrichtung der Schleuderscheibe 5 und/oder radial. Über ein jeweiliges Dosierorgan 8 kann über entsprechende Aktoren 9 die eingeleitete Menge pro Zeit des Düngers auf jeder Seite eingestellt werden. Der Düngerstreuer 1 und/oder der Schlepper umfassen ferner wenigstens ein GPS-System 160 und wenigstens eine Steuereinheit zum Ansteuern der Stellglieder zur Erzeugung eines vorbestimmten Streubildes 16. Die Steuerung kann Software- oder Hardwaremäßig realisiert werden, wobei vorzugsweise ein Bordcomputer 11 vorgesehen ist, in dem zum Beispiel bestimmte Auswerte- und Steuerungsprogramme hinterlegt sein können.

Fig. 2 zeigt beispielsweise einen für das Arbeiten entlang einer Feldfahrgasse symmetrisch angeordneten Normalstreufächer 16 hinter dem Düngerstreuer 1. Ein entsprechendes Streubild ist, beispielsweise als vorbestimmtes Streubild, in bekannter Weise zum Beispiel im Bordcomputer 11 bzw. einer entsprechenden Steuereinrichtung eingespeichert. Die einzelnen Stellglieder werden dann von der Steuereinrichtung beziehungsweise dem Bordcomputer 11 mit entsprechenden Sollwerten angesteuert, derart, dass das entsprechende Streubild erzeugt wird. Dabei werden beispielsweise die Antriebselemente 4 der jeweiligen Schleuderscheiben 5 angesteuert und/oder aber die Aktoren 9 der Dosierorgane 8 und/oder aber Mittel zur Einstellung der Position der Aufgabefläche 13, das heißt z.B. Mittel zum Einstellen der Stellung eines über einer Schleuderscheibe ausgebildeten Einleitsystems 13. Aber auch die Winkelposition der Wurfschaufeln 12 können auf einen entsprechenden Sollwert eingestellt werden. Dabei können die Stellglieder für die linke und rechte Seite, d.h. die linke und rechte Schleuderscheibe separat angesteuert werden.

Der Düngerstreuer 1 umfasst eine Einrichtung 10 zum Messen der Windstärke und der Windrichtung, die Daten an die Steuereinrichtung beziehungsweise den Bordcomputer 11 übermittelt. Der Bordcomputer 11 weist einen Anzeigebildschirm 12 auf. Mit der Einrichtung zum Messen der Windstärke und Windrichtung können die jeweils wirkenden Windverhältnisse im Bereich des Streubilds erfasst werden. In dem Bordcomputer 11 bzw. der Steuereinrichtung können Stoffdaten über die Streueigenschaften mittels geeigneter Eingabevorrichtungen eingegeben werden. Die Stoffdaten wurden vorab im Labor ermittelt. Die im Labor ermittelten verschiedenen Stoffeigenschaften der Düngersorten, die Einfluss auf das Flugverhalten haben, sowie bestimmte aerodynamische Gleichungen ermöglichen z.B. die Wurfparabeln bei Seitenwind zu berechnen.

Gemäß der vorliegenden Erfindung ist eine Korrektureinrichtung 30 vorgesehen, die beispielsweise als Korrekturprogramm im Bordcomputer 11 oder einer Steuereinrichtung integriert sein kann. Diese Korrektureinrichtung ermöglicht, dass mindestens ein Sollwert zum Ansteuern/Regeln von mindestens einem der vorab genannten Stellglieder zur Erzeugung des Streubilds in Abhängigkeit der gemessenen Windstärke und Windrichtung angepasst wird. Dies ist erforderlich, weil sich aufgrund von Seitenwindeinflusses die Ausbringung des Düngers auf der zu verteilenden Fläche entsprechend der Seitenwindverhältnisse ändert.

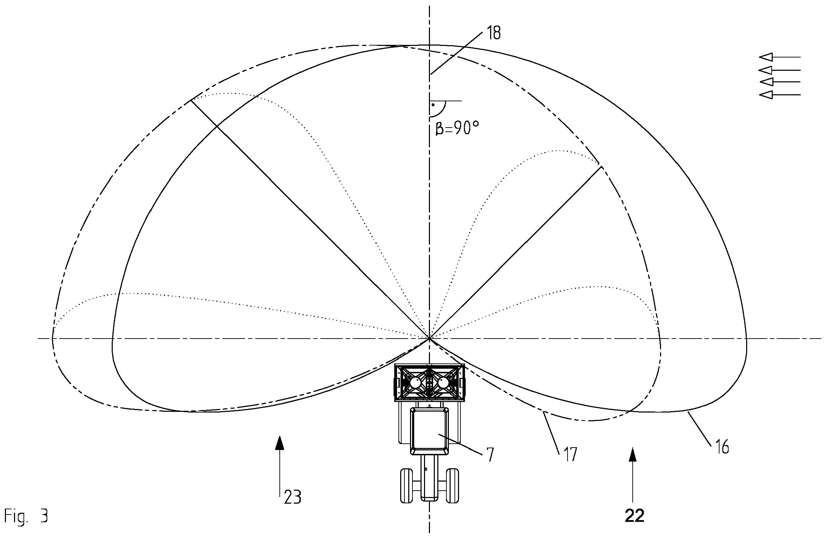

Fig. 3 zeigt in schematischer Weise einen Düngerstreuer 1, an dem ein Ackerschlepper 7 angebaut ist und Streubilder, das heißt Streufächer 16 und 17 ohne und mit Seitenwindeinfluss. Mit durchgezogener Linie 16 ist der vorbestimmte sich aus den beiden überlappenden Streufächern ergebende Gesamtstreufächer ohne Seitenwindeinfluss dargestellt. Dieser entspricht beispielsweise dem vorbestimmten Soll -Streubild 16. Mit strichpunktierten Linien ist der sich aus den beiden überlappenden Streufächer ergebende hörnchenförmige Gesamtstreufächer 17 mit Seitenwindeinfluss dargestellt, der dem Ist- Streubild entspricht.

Durch entsprechende Korrekturmaßnahmen beispielsweise hinsichtlich der Drehzahl der Schleuderscheiben und/oder Einstellung der Aktoren 9 der Dosierorgane 8 und/oder die Lage der Dosierorgane beziehungsweise eines Einleitsystems 13 auf die jeweilige Schleuderscheibe lässt sich der Seitenwindeinfluss kompensieren, sodass wieder das vorbestimmte Streubild 16 entsteht.

Wie bereits erläutert, kann diese Ansteuerung über den Bordcomputer 11 erfolgen, indem ein entsprechendes Korrekturprogramm hinterlegt ist, das derart ausgelegt ist, dass in einem ersten Korrekturmodus der mindestens eine Sollwert zum Ansteuern/Regeln von jeweils mindestens einem Stellglied 4, 9 derart angepasst wird, dass sich die seitliche Ausdehnung auf der dem Seitenwind zugewandten Seite 22 des Düngerstreuers 1 vergrößert und in einem zweiten Korrekturmodus der mindestens eine Sollwert derart angepasst wird, dass sich die seitliche Ausdehnung auf der dem Seitenwind abgewandten Seite 23 des Düngerstreuers 1 verkleinert. Im ersten Korrekturmodus kann beispielsweise die Drehzahl der Schleuderscheibe, die dem Wind zugewandt ist, das heißt auf der Seite 22 liegt, erhöht werden und die Drehzahl der gegenüberliegenden Schleuderscheibe verringert werden. Auch ist es möglich, das Streubild auf der Seite 23 nach innen, das heißt in Richtung Mittelachse des Düngerstreuers 18 zu drehen und auf der dem Wind zugewandten Seite 22 nach außen zu drehen. Dies kann beispielsweise durch Ändern des Abwurfwinkels, insbesondere der Position der Aufgabefläche über der Schleuderscheibe und/ oder durch Verändern der Stellung der Wurfschaufein erfolgen. So kann das in Fig. 3 dargestellte vorbestimmte Streubild 16 wieder erlangt werden. Um das vom Wind verzerrte Streubild wieder auszugleichen werden die Sollwerte für die Stellglieder der jeweiligen Schleuderscheiben 5 unterschiedlich angepasst. Zur Berechnung der Änderung der Sollwerte können beispielsweise in dem Bordcomputer diverse Algorithmen oder Tabellen hinterlegt sein. Dabei wird z.B. als Seitenwind die relative Windrichtung β zur Mittelachse 18 beispielsweise in einem Bereich von 15 bis 165 Grad, sowie die Windgeschwindigkeit berücksichtigt.

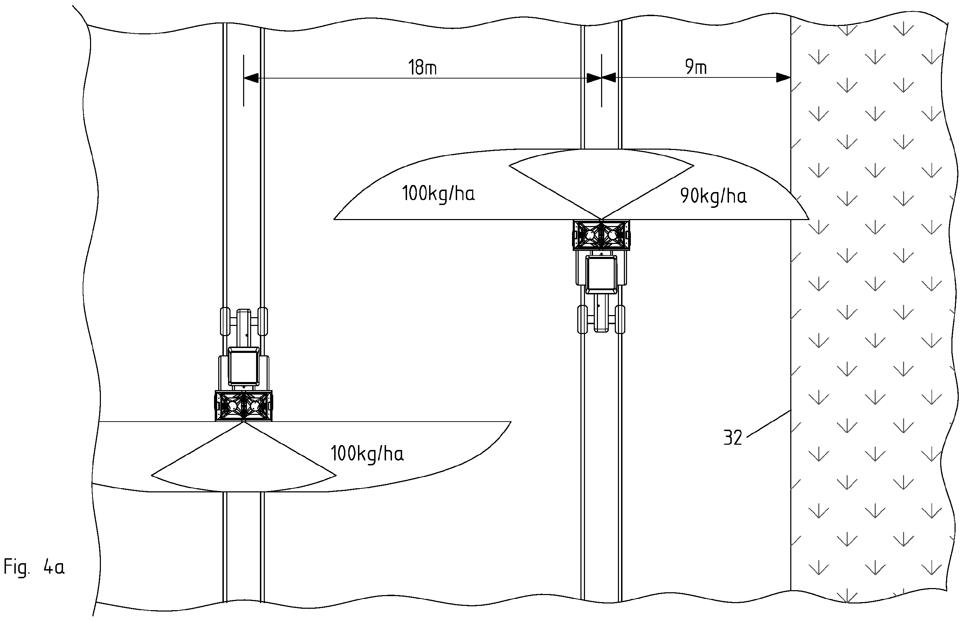

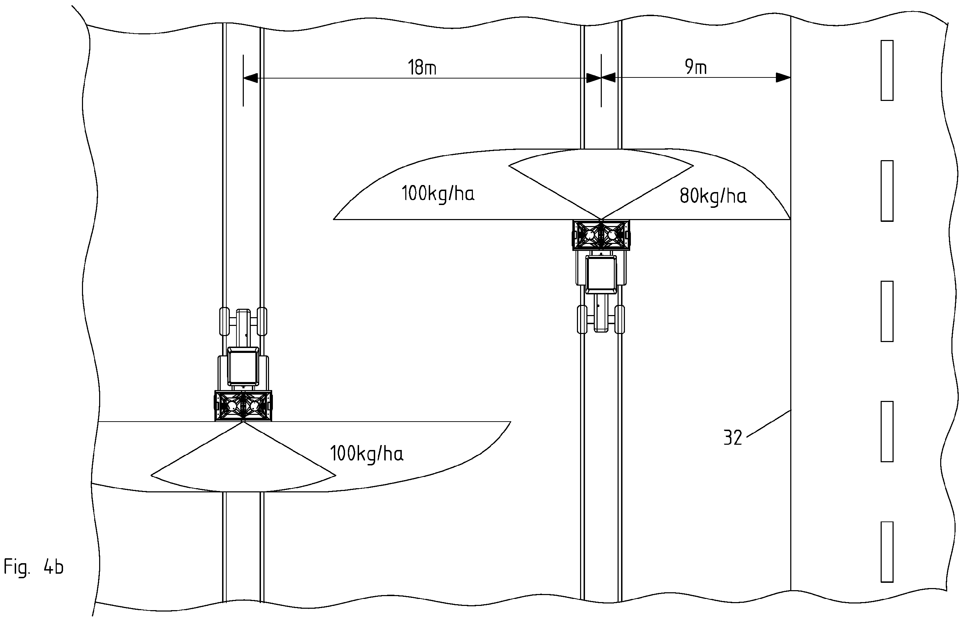

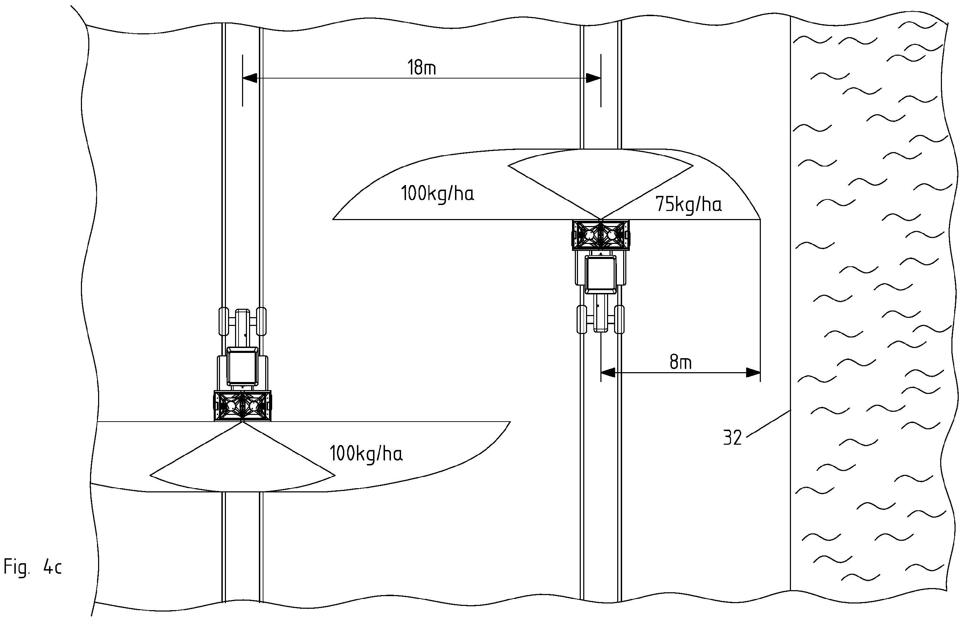

Beim Düngerstreuen an der Feldgrenze muss wie im Zusammenhang mit Figuren 4 a - c erläutert sichergestellt werden, dass kein oder nur eine geringe Menge an Dünger über eine Feldgrenze 32 geworfen wird. Fig. 4 a zeigt ein Randstreuen. Hier befindet sich die erste Fahrgasse direkt am Feldrand 32. Das vorbestimmte Streubild, das heißt Soll-Streubild, wird derart unsymmetrisch abgeändert, dass die der Feldgrenze 32 zugewandten Seite des Streubilds eine kleinere Ausdehnung aufweist. Bei der angrenzenden Fläche handelt es sich um eine landwirtschaftliche Nutzfläche.

Fig. 4b zeigt ein Grenzstreuen nach Düngeverordnung (z.B. mit einem halben Fahrgassenabstand zur Feldgrenze). Hier muss sichergestellt werden, dass kein Dünger über die Feldgrenze 32 hinaus auf angrenzende Flächen wie Wege, Gewässer, etc. ausgebracht wird. Fig. 4c zeigt ein entsprechendes Grabenstreuen, wobei die seitliche Ausdehnung des Streubildes noch weiter reduziert wurde und die Düngergrenze von der Feldgrenze 32 beabstandet ist. In dieser Anmeldung fällt unter dem Begriff Grenzstreuen auch Randstreuen und Grabenstreuen, wie in Figuren 4, a, b, c gezeigt ist.

Wie durch die gestrichelte Linie in Fig. 5 a dargestellt ist, verschiebt sich bei Seitenwind das vorbestimmte Streubild 16 in Windrichtung. Befindet sich die Fahrgasse nicht am Feldrand, so wird wie in Zusammenhang mit Fig. 3 gezeigt, und im linken Bereich der Fig. 5a dargestellt ist, das Ist-Streubild 17 unter Windeinfluss mithilfe des ersten und zweiten Korrekturmodus korrigiert, derart, dass das vorbestimmte Streubild 16 erhalten wird. Beim Grenzstreuen wird jedoch der erste Korrekturmodus auf der Seite 22 des Düngerstreuers 1, die dem Wind zugewandt ist deaktiviert, um absolut sicher zu stellen, dass kein Dünger über die Feldgrenze 32 geworfen wird. Wie in Fig. 6a dargestellt ist, werden ein oder mehrere Sollwerte für jeweils die linke und rechte Schleuderscheibe über den ersten und zweiten Korrekturmodus korrigiert wenn keine Grenzfahrt stattfindet. Wie aus Fig. 6b hervorgeht, wird beim Grenzstreuen nur der zweite Korrekturmodus auf der dem Wind abgewandten Seite aktiviert und der erste Korrekturmodus deaktiviert derart, dass der mindestens eine Sollwert für das vorbestimmte Grenzstreubild für die Stellglieder oder das Stellglied der rechten Schleuderscheibe nicht in Abhängigkeit der Windstärke oder Windrichtung verändert wird. Dabei wird in Kauf genommen, dass windbedingt das resultierende Streubild (gestrichelte Linie) eine kleinere seitliche Ausdehnung in Richtung Grenze 32 aufweist als das vorbestimmte Grenzstreubild auf dieser Seite.

Fig. 5b zeigt eine Grenzstreufahrt, bei der der Wind von der entgegengesetzten Seite her weht. Hier verschiebt sich das Ist-Streubild 17 nach rechts. In diesem Fall wird sowohl der erste Korrekturmodus, als auch der zweite Korrekturmodus aktiviert um sicherzustellen, dass durch den Wind kein Dünger über die Feldgrenze 32 getragen wird. Wie auch aus Fig. 6c hervorgeht, werden nun der oder die Sollwerte der linken Schleuderscheibe, das heißt hier der dem Wind zugewandten Schleuderscheibe über den ersten Korrekturmodus korrigiert und der oder die Sollwerte für die Stellglieder oder das Stellglied der rechten, das heißt dem Wind abgewandten Schleuderscheibe 5 über den zweiten Korrekturmodus korrigiert. Somit kann das korrekte vorbestimmte Grenzstreubild 16 erhalten werden. Wie auch vorab beschrieben sind zur Korrektur entsprechende Tabellen und Werte zum Beispiel im Bordrechner hinterlegt.

Um zu erkennen, ob sich der Düngerstreuer 1 im Grenzmodus befindet wird ein entsprechendes Signal in die Korrektureinrichtung 30 eingegeben, die dann den ersten Korrekturmodus entsprechend der Figuren 6b und c aktiviert oder deaktiviert, je nachdem auf welcher Seite des Düngerstreuers sich die Feldgrenze 32 befindet und aus welcher Richtung der Wind weht.

Die vorliegende Erfindung ermöglicht somit eine einfache Regelstrategie um zu verhindern, dass bei Windkorrektur Dünger über die Feldgrenze 32 geworfen wird.

## Patentansprüche

1. Verfahren zum Korrigieren eines Streubildes (17) eines Düngerstreuers (1), wobei eine Windstärke und Windrichtung gemessen wird und mindestens ein Sollwert zum Ansteuern/Regeln von jeweils mindestens einem Stellglied (4,9) zur Erzeugung eines vorbestimmten Streubildes (16) in Abhängigkeit der gemessenen Windstärke und Windrichtung angepasst wird, indem
bei Seitenwind in einem ersten Korrekturmodus der mindestens eine Sollwert derart angepasst wird, dass sich die seitliche Ausdehnung des Streubildes auf einer dem Seitenwind zugewandten Seite des Düngerstreuers (1) vergrößert und in
einem zweiten Korrekturmodus, der mindestens eine Sollwert derart angepasst wird, dass sich die seitliche Ausdehnung auf einer dem Seitenwind abgewandten Seite des Düngerstreuers verkleinert **dadurch gekennzeichnet, dass**
beim Grenzstreuen an einer Feldgrenze (32) auf der Seite des Düngerstreuers (1), die der Feldgrenze (32) zugewandt ist, der erste Korrekturmodus deaktiviert wird während der zweite Korrekturmodus aktiviert ist.

2. Verfahren nach Anspruch 1, **dadurch gekennzeichnet, dass** der zweite Korrekturmodus beim Grenzstreuen nur dann eingesetzt wird, wenn erfasst wird, dass der Dünger über die Feldgrenze geworfen werden würde.

3. Verfahren nach mindestens einem der Ansprüche 1 bis 2, **dadurch gekennzeichnet, dass** zur Korrektur des Streubildes mindestens eines der folgenden Stellglieder angesteuert wird:
Antriebselement (4) einer jeweiligen Schleuderscheibe (5),
Aktoren (9) der Dosierorgane (8),
Mittel zur Einstellung der Position Aufgabefläche auf einer jeweiligen Schleuderscheibe(5).

4. Verfahren nach mindestens einem der Ansprüche 1 bis 3, **dadurch gekennzeichnet, dass** mindestens einer folgender Sollwerte oder ein entsprechend proportionaler Wert zur Korrektur des Streubildes in Abhängigkeit der gemessenen Windstärke und/oder Windrichtung angepasst wird:
Drehzahl eines Antriebselements (4) einer jeweiligen Schleuderscheibe (5), Dosiermenge pro Zeit eines Düngerdosierorgans (9), Abwurfwinkel des Düngers von einer jeweiligen Schleuderscheibe, Stellung eines über einer jeweiligen Schleuderscheibe (5) ausgebildeten Einleitsystems, Winkelposition einer jeweiligen Wurfschaufel.

5. Verfahren nach mindestens einem der Ansprüche 1-4, **dadurch gekennzeichnet, dass** im zweiten Korrekturmodus die Wurfweite, insbesondere die Drehzahl der Schleuderscheibe (5) die der Feldgrenze zugewandt ist, reduziert wird oder das von dieser Schleuderscheibe (5) erzeugte Streubild nach innen von der Feldgrenze (32) weggedreht wird.

6. Verfahren nach Anspruch 5, **dadurch gekennzeichnet, dass** im ersten Korrekturmodus die Wurfweite, insbesondere Drehzahl der Schleuderscheibe, die der Feldgrenze (32) abgewandt ist erhöht wird und/oder, dass von dieser Schleuderscheibe (5) erzeugte Streubild nach außen von dem Düngerstreuer weggedreht wird.

7. Düngerstreuer, insbesondere zum Durchführen des Verfahrens nach wenigstens einem der Ansprüche 1 bis 6, mit dem ein Streubild korrigiert werden kann, mit einer Einrichtung (10) zum Messen der Windstärke und Windrichtung,
einer Korrektureinrichtung, die derart ausgebildet ist, dass mindestens ein Sollwert zum Ansteuern/Regeln von jeweils mindestens einem Stellglied (4,9) zur Erzeugung des Streubildes in Abhängigkeit der gemessenen Windstärke und Windrichtung angepasst werden kann, wobei in einem ersten Korrekturmodus der mindestens eine Sollwert derart angepasst werden kann, dass sich die seitliche Ausdehnung des Streubildes auf einer Seite des Düngerstreuers vergrößern kann und in einem zweiten Korrekturmodus der mindestens eine Sollwert derart angepasst werden kann, dass sich die seitliche Ausdehnung auf der gegenüberliegenden Seite verkleinern kann **dadurch gekennzeichnet, dass**
der erste Korrekturmodus deaktivierbar ist, während der zweite Korrekturmodus gleichzeitig aktivierbar ist.

8. Düngerstreuer nach Anspruch 7, **dadurch gekennzeichnet, dass** der Düngerstreuer (1) eine Einrichtung umfasst zum Erfassen, ob der Düngerstreuer im Grenzstreubetrieb arbeitet und ein entsprechendes Signal an die Korrektureinrichtung geleitet werden kann.

## Claims

1. Method for correcting a spread pattern (17) of a fertilizer spreader (1), wherein a wind strength and wind direction are measured, and at least one setpoint value for actuating/adjusting in each case at least one actuator element (4, 9) to generate a predetermined spread pattern (16) is adapted as a function of the measured wind strength and wind direction in that
in the case of a side wind the at least one setpoint value is adapted in a first correction mode in such a way that the lateral extent of the spread pattern on a side of the fertilizer spreader (1) facing the side wind is increased and
in a second correction mode the at least one setpoint value is adapted in such a way that the lateral extent on a side of the fertilizer spreader facing away from the side wind is reduced, **characterized in that**
in the case of boundary spreading at a field boundary (32) on the side of the fertilizer spreader (1) which faces the field boundary (32) the first correction mode is deactuated while the second correction mode is actuated.

2. Method according to Claim 1,
**characterized in that** in the case of boundary spreading the second correction mode is used only if it is detected that the fertilizer would be thrown beyond the field boundary.

3. Method according to at least one of Claims 1 to 2, **characterized in that** at least one of the following actuator elements is actuated in order to correct the spread pattern:
a drive element (4) of a respective centrifugal disc (5),
actuators (9) of the metering element (8),
means for adjusting the position of the application area on a respective centrifugal disc (5).

4. Method according to at least one of Claims 1 to 3, **characterized in that** at least one of the following setpoint values or a correspondingly proportional value for correcting the spread pattern is adapted as a function of the measured wind strength and/or wind direction:
rotational speed of a drive element (4) of a respective centrifugal disc (5), metering quantity per time of a fertilizer metering element (9), ejection angle of the fertilizer from a respective centrifugal disc, position of an infeed system which is embodied above a respective centrifugal disc (5), angular position of a respective throwing blade.

5. Method according to at least one of Claims 1-4, **characterized**
**in that** in the second correction mode the throwing distance, in particular the rotational speed of the centrifugal disc (5) facing the field boundary is reduced or the spread pattern which is generated by this centrifugal disc (5) is turned away inward from the field boundary (32).

6. Method according to Claim 5,
**characterized in that** in the first correction mode the throwing distance, in particular the rotational speed of the centrifugal disc facing away from the field boundary (32) is increased, and/or the spread pattern which is generated by this centrifugal disc (5) is turned away outward from the fertilizer spreader.

7. Fertilizer spreader, in particular for carrying out the method according to at least one of Claims 1 to 6, with which a spread pattern can be corrected, having a device (10) for measuring the wind strength and wind direction, a correction device which is embodied in such a way that at least one setpoint value for actuating/adjusting in each case at least one actuator element (4, 9) for generating the spread pattern can be adapted as a function of the measured wind strength and wind direction, wherein in a first correction mode the at least one setpoint value can be adapted in such a way that the lateral extent of the spread pattern can be increased on one side of the fertilizer spreader, and in a second correction mode the at least one setpoint value can be adapted in such a way that the lateral extent on the opposite side can be reduced, **characterized in that**
the first correction mode can be deactuated while the second correction mode can simultaneously be actuated.

8. Fertilizer spreader according to Claim 7, **characterized in that** the fertilizer spreader (1) comprises a device for detecting whether the fertilizer spreader is operating in the boundary spreading mode and a corresponding signal can be conducted to the correction device.

## Revendications

1. Procédé de correction d'un schéma d'épandage (17) d'une épandeuse d'engrais (1), une force du vent et une direction du vent étant mesurées et au moins une valeur de consigne servant à commander/réguler respectivement au moins un actionneur (4, 9) en vue de produire un schéma d'épandage prédéterminé (16) étant adaptée en fonction de la force du vent et de la direction du vent mesurées,
dans le cas de vents latéraux, en adaptant l'au moins une valeur de consigne dans un premier mode de correction de telle sorte que l'expansion latérale du schéma d'épandage est agrandie sur un côté de l'épandeuse d'engrais (1) qui fait face au vent latéral et
en adaptant l'au moins une valeur de consigne dans un deuxième mode de correction de telle sorte que l'expansion latérale est réduite sur un côté de l'épandeuse d'engrais qui est à l'opposé du vent latéral,
**caractérisé en ce que**
lors de l'épandage en limite au niveau d'une limite de champ (32) sur le côté de l'épandeuse d'engrais (1) qui fait face à la limite de champ (32), le premier mode de correction est désactivé pendant que le deuxième mode de correction est activé.

2. Procédé selon la revendication 1, **caractérisé en ce que** le deuxième mode de correction n'est appliqué lors de l'épandage de limite que lorsqu'il est détecté que l'engrais serait projeté au-delà de la limite de champ.

3. Procédé selon au moins l'une des revendications 1 à 2, **caractérisé en ce qu'**au moins l'un des actionneurs suivants est commandé en vue de la correction du schéma d'épandage :
l'élément d'entraînement (4) d'un disque de centrifugation (5) respectif,
les actionneurs (9) des organes de dosage (8),
des moyens servant au réglage de la position de la surface de dépose d'un disque de centrifugation (5) respectif.

4. Procédé selon au moins l'une des revendications 1 à 3, **caractérisé en ce qu'**au moins l'une des valeurs de consigne suivantes, ou une valeur proportionnelle correspondante, est adaptée en vue de corriger le schéma d'épandage en fonction de la force du vent et/ou de la direction du vent mesurée :
vitesse de rotation d'un élément d'entraînement (4) d'un disque de centrifugation (5) respectif, quantité dosée par unité de temps d'un organe de dosage d'engrais (9), angle d'éjection de l'engrais depuis un disque de centrifugation respectif, position d'un système d'initiation formé au-dessus du disque de centrifugation (5) respectif, position angulaire d'une pale d'éjection respective.

5. Procédé selon au moins l'une des revendications 1 à 4, **caractérisé en ce que** dans le deuxième mode de correction, la largeur d'éjection, notamment la vitesse de rotation du disque de centrifugation (5) qui fait face à la limite de champ, est réduite ou le schéma d'épandage produit par ce disque de centrifugation (5) est tourné vers l'intérieur à l'écart de la limite de champ (32).

6. Procédé selon la revendication 5, **caractérisé en ce que** dans le premier mode de correction, la largeur d'éjection, notamment la vitesse de rotation du disque de centrifugation qui est à l'opposé de la limite de champ (32), est augmentée et/ou le schéma d'épandage produit par ce disque de centrifugation (5) est tourné vers l'extérieur à l'écart de l'épandeuse d'engrais.

7. Épandeuse d'engrais, notamment pour mettre en oeuvre un procédé selon au moins l'une des revendications 1 à 6, avec laquelle il est possible de corriger un schéma d'épandage, comprenant un dispositif (10) destiné à mesurer la force du vent et la direction du vent, un dispositif de correction qui est configuré de telle sorte qu'au moins une valeur de consigne servant à commander/réguler respectivement au moins un actionneur (4, 9) en vue de produire le schéma d'épandage peut être adaptée en fonction de la force du vent et de la direction du vent mesurées, dans un premier mode de correction, l'au moins une valeur de consigne pouvant être adaptée de telle sorte que l'expansion latérale du schéma d'épandage peut s'agrandir sur un côté de l'épandeuse d'engrais et, dans un deuxième mode de correction, l'au moins une valeur de consigne peut être adaptée de telle sorte que l'expansion latérale peut être réduite sur le côté opposé,
**caractérisée en ce que** le premier mode de correction peut être désactivé pendant que le deuxième mode de correction peut être activé.

8. Épandeuse d'engrais selon la revendication 7, **caractérisée en ce que** l'épandeuse d'engrais (1) comporte un dispositif destiné à détecter si l'épandeuse d'engrais fonctionne en mode d'épandage de limite et si un signal correspondant peut être acheminé au dispositif de correction.
